# EUROPÄISCHE PATENTANMELDUNG

(11) **EP 4 726 745 A1**
(43) Veröffentlichungstag der Anmeldung: **15.04.2026**
(21) Anmeldenummer: 24205352.8
(22) Anmeldetag: 08.10.2024
(51) Int. Cl.: H01C 1/028, H01C 1/148, H01C 7/06, H01C 17/02, H01C 17/28, G01K 7/18, H01C 1/142, H01C 17/00

(54) **VERFAHREN ZUR HERSTELLUNG EINES OBERFLÄCHENMONTIERBAREN BAUTEILS FÜR EINE ELEKTRONISCHE VORRICHTUNG UND OBERFLÄCHENMONTIERBARES BAUTEIL**

(71) Anmelder: Yageo Nexensos GmbH, 63801 Kleinostheim (DE)
(72) Erfinder: NICK, Christoph, 63801 Kleinostheim (DE); EMMERICH, Florian, 63801 Kleinostheim (DE)
(74) Vertreter: Meissner Bolte Partnerschaft mbB

(57) **Zusammenfassung**

Die Erfindung betrifft ein Verfahren (100) zur Herstellung eines oberflächenmontierbaren Bauteils (10) für eine elektronische Vorrichtung, die folgenden Schritte umfassend:
a) Bereitstellen (110) eines Substratbogens (12), wobei der Substratbogen (12) eine erste Seite (14) mit einem ersten und einem zweiten Elektrodenabschnitt (16, 18) aufweist,
b) Aufbringen (120) eines dritten und mindestens eines vierten Elektrodenabschnitts (26) auf einer zweiten Seite (30) des Substratbogens (12),
c) Aufbringen (130) einer Passivierungsschicht (32) auf den Elementabschnitt (20),
d) Aufbringen (140) einer Schutzschicht (34) auf die Passivierungsschicht (32),
e) Vereinzeln (150) des Substratbogens (12) in mehrere erste Substrat-Nutzen (36),
f) Aufbringen (160) einer Metallisierungsschicht (48) auf mindestens eine Fläche (42) des ersten Substrat-Nutzens (36),
g) Vereinzeln (170) der mehreren ersten Substrat-Nutzen (36) in mehrere einzelne Substrate (46),
h) Aufbringen (180) mindestens einer Kantenmetallisierungsschicht (48) und/oder auf die Metallisierungsschicht (40) der mindestens einen Fläche (42) der Mantelfläche (50) des ersten Substrat-Nutzens (36) und auf die oberste Schicht des Elektrodenabschnitts (16, 18).

## Beschreibung

Die Erfindung betrifft ein Verfahren zur Herstellung eines oberflächenmontierbaren Bauteils für eine elektronische Vorrichtung nach Anspruch 1 sowie ein oberflächenmontierbares Bauteil für eine elektronische Vorrichtung nach Anspruch 11.

Im Stand der Technik werden typischerweise Temperatursensoren in SMD-Bauweise mit verschiedenen Gläsern abgedeckt (oft auch als Deckschicht bezeichnet) um den Schutz des elektrisch leitfähigen Mäanders sicherzustellen und zu gewährleisten.

Diese Passivierungs- und Abdeckgläser werden entweder durch Sieb- oder Schablonendruck als Paste aufgetragen und anschließend getrocknet und eingebrannt. Die für das Einbrennen erforderlichen Temperaturen sind in der Regel hoch, das heißt sie sind wesentlich höher als 600°C. Dies kann zu einer Änderung des elektrischen Widerstandes und des Temperaturkoeffizienten des jeweiligen Sensors führen und muss dementsprechend im Herstellungsprozess berücksichtigt werden.

Im Stand der Technik werden diese speziellen Passivierungs- und Abdeckgläser allerdings benötigt, da in späteren Prozessschritten Metallpasten aufgetragen, getrocknet und eingebrannt werden müssen. Zur Verarbeitung, insbesondere dem Einbrennen, der Metallpasten werden sehr hohe Temperaturen von ca. 800°C benötigt. Diese hohen Prozesstemperaturen dürfen die Passivierungsmaterialien beim Auftragen, Trocknen und Einbrennen der Metallpasten nicht beschädigen oder die Leistung des Bauteils reduzieren.

Solche Metallpasten werden unter anderem zur Herstellung der Kantenmetallisierung bei diesen SMD-Bauelementen verwendet. Üblicherweise wird diese Kantenmetallisierung durch Eintauchen der Sensoren in die Metallpaste (meist Silber) hergestellt. Alternativ wird die Paste über ein Roller-Coating-Verfahren auf die Kante aufgetragen. Als weitere Alternative werden Dickschichtpads auf der Ober- und Unterseite des Bauteils strukturiert und die Kante mit einem Dünnschichtprozess (z.B. Sputtern) metallisiert.

Bei allen Möglichkeiten erfolgt anschließend ein galvanischer Prozess, der jedoch nicht temperaturkritisch ist. Allerdings sind die beschriebenen Prozesse zur Herstellung der Saatschicht insofern kritisch, als die Metallpasten nach dem Auftragen getrocknet und gesintert werden müssen. Das bedeutet, dass alle Schichten, also auch die Passivierungsschichten, so robust sein müssen, dass sie die Hochtemperaturprozesse unbeschadet überstehen.

Ein derartiger Sensor kann der DE 199 32 411 A1 entnommen werden. Diese beschreibt einen Temperatursensor, bei dem die Widerstandsschicht unter anderem mittels PVD-Verfahren aufgebracht wird. Dies ist mittlerweile Industriestandard und wird bei allen Dünnschicht-Sensoren eingesetzt. Beschrieben werden auch diverse Dünnschicht-Diffusionsbarrieren, die jedoch zusätzlich durch eine Passivierungsschicht im Dickschichtverfahren abgedeckt werden, die ein Sintern bei hohen Temperaturen bedingen.

Nachteilig daran ist, dass diese Prozesse bzw. Verfahren mindestens einen Einbrenn-Schritt bei hohen Temperaturen aufweisen. Die hohen Temperaturen können zu Änderungen des elektrischen Widerstands und des Temperaturkoeffizienten führen, wodurch die Genauigkeit der hochpräzisen Sensoren beeinträchtigt werden kann, sodass der normgerechte Einsatz nicht gewährleistet werden kann. Zusätzlich ist das Aufbringen und Prozessieren der verschiedenen Materialien komplex und kostspielig.

Es ist daher die Aufgabe der Erfindung ein Verfahren zur Herstellung eines oberflächenmontierbaren Bauteils zur Verfügung zu stellen, dass sicherstellt, dass der elektrische Widerstand und der Temperaturkoeffizient bei der Herstellung nicht negativ beeinträchtigt werden und welches einfach durchzuführen ist.

Die Aufgabe wird gelöst mit einem Verfahren zur Herstellung eines oberflächenmontierbaren Bauteils für eine elektronische Vorrichtung gemäß Anspruch 1 und einem oberflächenmontierbaren Bauteil gemäß Anspruch 11.

Ein erster Aspekt der Verfahren zur Herstellung eines oberflächenmontierbaren Bauteils für eine elektronische Vorrichtung, wobei das Verfahren die folgenden Schritte umfasst:
a) Bereitstellen eines Substratbogens,
   wobei der Substratbogen eine erste Seite mit einem ersten Elektrodenabschnitt und einem zweiten Elektrodenabschnitt aufweist, wobei zwischen dem ersten Elektrodenabschnitt und dem zweiten Elektrodenabschnitt ein Elementabschnitt ausgebildet ist, wobei der Elementabschnitt ein resistives Element aufweist und der erste und zweite Elektrodenabschnitt eine Metallisierung aufweisen,
b) Aufbringen eines dritten Elektrodenabschnitts und mindestens eines vierten Elektrodenabschnitts auf einer zweiten Seite des Substratbogens, wobei die zweite Seite der ersten Seite des Substratbogens gegenüberliegend angeordnet ist,
c) Aufbringen einer Passivierungsschicht auf den Elementabschnitt, wobei die Passivierungsschicht insbesondere als ein mehrlagiges Schichtsystem ausgebildet ist,
d) Aufbringen einer Schutzschicht auf die Passivierungsschicht,
e) Vereinzeln des Substratbogens in mehrere erste Substrat-Nutzen, insbesondere mehrere Substrat-Zeilen-Nutzen,
f) zumindest abschnittsweises Aufbringen einer Metallisierungsschicht auf mindestens eine Fläche, insbesondere mindestens eine Trennfläche, des ersten Substrat-Nutzens, welche sich zwischen der ersten Seite und der zweiten Seite erstreckt,
g) Vereinzeln der mehreren ersten Substrat-Nutzen in mehrere einzelne Substrate,
h) zumindest abschnittsweises Aufbringen, und insbesondere Galvanisieren, mindestens einer Kantenmetallisierungsschicht auf mindestens eine Fläche, insbesondere der mindestens einen Trennfläche, einer Mantelfläche des Substrats und/oder auf die Metallisierungsschicht der mindestens einen Fläche, insbesondere der mindestens einen Trennfläche, der Mantelfläche des ersten Substrat-Nutzens und auf die oberste Schicht des Elektrodenabschnitts.

Als Substratbogen wird vorliegend ein aus dem Material des Substrats bestehendes Bauteil mit einer großen Fläche verstanden, welches sich im Laufe des Verfahrens in mehreren Schritten in mehrere kleine, insbesondere rechteckige, Elemente vereinzeln lässt. Im vorliegenden Verfahren wird der Substratbogen zunächst in mehrere erste Substrat-Nutzen vereinzelt. Insbesondere kann das erste Vereinzeln in einen bzw. mehrere Substrat-Zeilen-Nutzen durchgeführt werden. Als Zeile wird vorliegend die erste Richtung verstanden, in die der Substratbogen vereinzelt wird.

In einem späteren Schritt wird jeder der ersten Substrat-Nutzen bzw. Substrat-Zeilen-Nutzen in mehrere zweite Substrat-Nutzen bzw. Substrate vereinzelt. Dies wird in einer zweiten Richtung durchgeführt, so dass hier von einer Spalte gesprochen werden kann.

Die erste Richtung der Vereinzelung ist orthogonal oder im Wesentlichen orthogonal zu der zweiten Richtung der Vereinzelung. Demnach entsteht eine Zeilen-Spalten-Vereinzelung. Im Wesentlichen orthogonal beschreibt hier eine geringe mögliche Abweichung von kleiner als 10°, insbesondere kleiner als 5°, von der Orthogonalität der beiden Richtungen zueinander.

Die Metallisierungsschicht des ersten und zweiten Elektrodenabschnitts sowie des dritten und vierten Elektrodenabschnitts kann in vorteilhafterweise aber nicht ausschließlich Platin aufweisen.

Dabei kann es vorteilhaft sein, wenn die Passivierungsschicht gesputtert wird. Diese Passivierungsschicht wird durch die Schutzschicht, beispielsweise einem Kunststoff, insbesondere Epoxy, in einem Druckverfahren, insbesondere einem Siebdruckverfahren oder Schablonendruckverfahren, oder durch Jetten aufgebracht und anschließend getrocknet.

Während des Aufbringens der Passivierungsschicht und der Schutzschicht sind die ersten und zweiten Elektrodenabschnitte zum Schutz maskiert, so dass diese weder passiviert sind noch von der Schutzschicht bedeckt sind. Diese Maskierung wird entfernt, bevor das Auftragen eines weiteren Materials auf die Elektrodenabschnitte ansteht.

Die Schutzschicht kann in vorteilhafterweise Kunststoff oder Glas oder gesputtertes Oxid aufweisen.

Das Vereinzeln kann mittels Brechen, Sägen oder durch Laservereinzeln durchgeführt werden. Dabei entsteht bei jedem Vereinzeln die Fläche, insbesondere die Trennfläche, der Mantelflächen des ersten Substrat-Nutzens, welche später eine Metallisierungsschicht aufweist.

Die Temperatur spielt eine entscheidende Rolle bei der Galvanisierung, einem elektrochemischen Prozess, bei dem eine Metallbeschichtung auf ein leitfähiges Substrat aufgebracht wird. Sie beeinflusst nicht nur die Geschwindigkeit der chemischen Reaktionen, sondern auch die Qualität und die Eigenschaften der abgeschiedenen Metallbeschichtung.

Während der Galvanisierung ist die Kontrolle der Temperatur im Elektrolyten, der Lösung, in der die galvanische Beschichtung stattfindet, von größter Bedeutung. Typischerweise wird die Temperatur des Elektrolyten in einem Bereich von 20°C bis 350°C, insbesondere 100°C bis 300°C, gehalten, abhängig von der Art des Metalls und des gewünschten Ergebnisses. Eine optimale Temperatur sorgt dafür, dass die Ionenbewegung im Elektrolyten gleichmäßig verläuft, was eine gleichmäßige Metallabscheidung zur Folge hat.

Das Verfahren lässt somit das Herstellen bei niedrigen Temperaturen zu. Dies führt zum einen dazu, dass andere, unter anderem günstigere, Materialien verwendet werden können, wie beispielsweise Kunststoff und andererseits, dass der Widerstand und die Genauigkeit des Sensors nicht verändert werden.

In einer vorteilhaften Ausgestaltung des Verfahrens, wird eine metallisch leitende Diffusionsbarriere auf das Elektrodenmaterial des ersten Elektrodenabschnitts und des zweiten Elektrodenabschnitts aufgebracht (Schritt d1). Alternativ oder zusätzlich kann eine metallisch leitende Abdeckschicht auf die Diffusionsbarriere und/oder den dritten und vierten Elektrodenabschnitt aufgebracht werden (Schritt d2).

Diese beiden alternativen Schritte können einzeln oder gemeinsam nach dem Schritt d) Aufbringen einer Schutzschicht auf die Passivierungsschicht, aber vor dem Vereinzeln (Schritt e)) durchgeführt werden.

Die Diffusionsbarriere sorgt dabei dafür, dass ein Austausch von Atomen, Ionen oder Molekülen zwischen dem ersten und zweiten Elektrodenabschnitt und der Abdeckschicht bzw. der Kantenmetallisierungsschicht verhindert oder zumindest verlangsamt und reduziert wird.

Die Abdeckschicht kann sowohl auf die Diffusionsbarriere des ersten und zweiten Elektrodenabschnitts als auch auf den dritten und vierten Elektrodenabschnitt aufgebracht werden. Diese dient als zusätzlicher Schutz bei der Kantenmetallisierung und hat leichte diffusionsverhindernde Eigenschaften.

Bei dem Verfahren ist es besonders vorteilhaft, wenn mindestens eine Passivierungsschicht und/oder die optionale Diffusionsbarriere und/oder die Abdeckschicht und/oder die Metallisierungsschicht jeweils in einem PVD-Beschichtungsprozess oder einem CVD-Beschichtungsprozess oder durch Bedampfen aufgebracht wird/werden.

Durch das Bedampfen können dünne Schichten auf Substraten erzeugt. Dabei kann Bedampfen in die physikalische und die chemische Gasphasenabscheidung unterschieden werden. Bei der physikalischen Gasphasenabscheidung (PVD) wird Material in einem Hochvakuum aus der festen Phase in die Gasphase und wieder zurück in eine dünne Schicht der festen Phase überführt. Techniken wie thermisches Verdampfen, Elektronenstrahlverdampfen und Sputtern fallen unter diese Kategorie. Bei der chemischen Gasphasenabscheidung (CVD) finden chemische Reaktionen statt, die Material auf dem Substrat abscheiden. Hierzu zählen Verfahren wie plasmagestützte CVD (PECVD) und metallorganische CVD (MOCVD).

Das Bedampfen ermöglicht die Herstellung von hochreinen, gleichmäßigen und gut haftenden Beschichtungen.

Der Sputterprozess, auch als Sputterdeposition bekannt, ist ein physikalisches Beschichtungsverfahren, bei dem eine feste Materialoberfläche durch energiereiche Partikel (meist Ionen) bombardiert wird. Diese Ionen werden in einem Vakuum durch ein elektrisches Feld beschleunigt und treffen auf das Targetmaterial, wodurch Atome aus dessen Oberfläche herausgeschlagen werden. Diese herausgeschlagenen Atome kondensieren anschließend auf einem Substrat und bilden dort eine dünne Schicht. Der Prozess ermöglicht präzise Kontrolle über die Schichtdicke und Zusammensetzung.

Der Sputterprozess eignet sich demnach für das Auftragen vergleichsweise dünner Schichten. Da zum Sputtern keine hohen Temperaturen benötigt werden, wie es beispielsweise bei aus dem Stand der Technik üblichen Verfahren wie Siebdruck und Einbrand nötig ist, wird der spätere Einsatz von Niedertemperaturmaterialien als zusätzliche Schutzschichten, wie beispielsweise Kunststoff, ermöglicht. Dies ermöglicht eine breitere Materialauswahl und reduzierte Kosten.

Eine weitere mögliche Ausgestaltung des Verfahrens, sieht vor, dass das resistive Element des Elementabschnitts, insbesondere vor dem Aufbringen der Passivierungsschicht, in einem Trimmprozess, insbesondere in einem digitalen Trimmprozess, getrimmt wird.

Der Trimmprozess erlaubt eine Feinabstimmung und Korrektur des Widerstands des resistiven Elementes, so dass die Leistung, Genauigkeit oder Funktionalität des Endprodukts präzise eingestellt werden kann. Insbesondere das Trimmen des resistiven Elementes vor dem Aufbringen der Passivierungsschicht, ist dabei vorteilhaft, da es direkt auf dem resistiven Element angewendet werden kann ohne weitere Schichten durchbrechen zu müssen, so dass der Trimmprozess genauer ist und keine weiteren Schichten beeinflusst werden.

In einer anderen möglichen Ausgestaltung des Verfahrens wird die Abdeckschicht per Laser bearbeitet oder beschriftet. Es ist möglich, hier den Nominalwert und oder den Absolutwert des Widerstands bei Standardbedingungen optisch detektierbar zu vermerken. In der weiter speziellen Ausgestaltung kann auch der Absolutwert des Widerstandes vermerkt werden. Insbesondere ist diese Aufschreibung auch direkt nach dem Trimmprozess oder gar anstelle eines Trimmprozesses möglich, da die nachfolgenden Schritte mit schonender Temperaturwahl die Absolutwerte im Widerstand und des Temperaturkoeffizienten nur sehr gering beeinflussen und insbesondere wenig Streuung in der Bandbreite zu erwarten ist.

Des Weiteren kann es bei der Ausführung des Verfahrens von Vorteil sein, wenn die Passivierungsschicht eine anorganische Sputterschicht, insbesondere Siliziumdioxid (SiO2) und/oder Tantalpentoxid (Ta2O5), aufweist.

Durch die Kombination einer dünnen Passivierungsschicht aus Siliziumdioxid und/oder Tantalpentoxid und der Schutzschicht, wobei Epoxy bevorzugt wird, wird eine dichte und robuste Versiegelung des resistiven Elements im Elementabschnitt erzeugt. Dies erhöht die Sicherheit und Robustheit im Einsatz des oberflächenmontierbaren Bauteils.

Besonders vorteilhaft bei dem Verfahren ist es, wenn die Diffusionsbarriere eine Titan-Wolfram-Legierung (TiW) mit 5 bis 30 % Titan aufweist.

Die Titan-Wolfram-Legierungen sorgen aufgrund ihrer hohen chemischen Stabilität und Korrosionsbeständigkeit für langlebige und zuverlässige Schichten, die nicht leicht durch Umgebungsfaktoren beeinträchtigt werden. Des Weiteren besitzen Titan-Wolfram Legierungen eine geringe Diffusionsrate, was sie zu effektiven Diffusionsbarrieren macht, so dass das Diffundieren unerwünschter Atome in empfindliche Bereiche effektiv verhindert wird.

Des Weiteren weisen Titan-Wolfram-Legierungen eine ausgezeichnete Haftung auf verschiedenen Substraten auf, was die Qualität und Integrität der aufgetragenen Schichten verbessert. Schließlich bieten diese Legierungen eine gute elektrische Leitfähigkeit, was sie ideal für Anwendungen macht, bei denen sowohl mechanische als auch elektrische Eigenschaften von Bedeutung sind.

Besonders vorteilhaft bei der Durchführung des Verfahrens und für das oberflächenmontierbare Bauteil kann es sein, wenn die Abdeckschicht metallisch leitend ist und insbesondere Kupfer (Cu) aufweist.

Die Abdeckschicht schützt den ersten und zweiten Elektrodenabschnitt sowie die Diffusionsbarriere bzw. die dritten und vierten Elektrodenabschnitte vor äußeren Einflüssen wie Feuchtigkeit, Staub und chemischen Stoffen schützt. Diese Schicht verbessert die Langlebigkeit und Zuverlässigkeit des oberflächenmontierbaren Bauteils, indem sie mechanische Schäden verhindert und eine stabile Betriebsumgebung sicherstellt. Die Abdeckschicht kann auch dazu beitragen, die Selektivität und Empfindlichkeit des oberflächenmontierbaren Bauteils zu erhöhen, indem sie unerwünschte Interferenzen filtert. Insgesamt optimiert die Abdeckschicht die Leistungsfähigkeit und Lebensdauer des Sensors in verschiedenen Anwendungsbereichen.

Von besonderem Vorteil kann es bei dem Verfahren sein, wenn die Metallisierungsschicht eine Nickel-Chrom Legierung (NiCr) mit 5 bis 30 % Chrom aufweist.

Ein Vorteil von Nickel-Chrom-Legierungen ist ihre ausgezeichnete Beständigkeit gegen Korrosion und Oxidation sowie ihre gute elektrische Leitfähigkeit.

Des Weiteren kann sich die vorteilhafte Wirkung des Verfahrens darin zeigen, dass die Kantenmetallisierungsschicht als ein Schichtsystem, insbesondere ein Nickel-Zinn-Schichtsystem, aufgebracht wird, wobei das Schichtsystem eine erste Schicht, insbesondere eine Nickel-Schicht, mit einer Dicke von 2 bis 10 µm aufweist und, wobei das Schichtsystem eine zweite Schicht, insbesondere eine Zinn-Schicht, eine Dicke von 3 bis 10 µm aufweist.

Nickel-Zinn-Schichten weisen eine gute Korrosionsbeständigkeit auf, was sie ideal für den Schutz von Metallsubstraten in aggressiven Umgebungen macht. Des Weiteren besitzen sie eine hohe Härte und Verschleißfestigkeit, was ihre Lebensdauer und Beständigkeit gegen mechanische Beanspruchung erhöht. Besonders vorteilhaft bei dem Aufbringen der Nickel-Zinn-Schichten auf ein Substrat ist ihre gute Haftung auf verschiedenen Substraten, was zu einer verbesserten Schichtintegrität und -zuverlässigkeit führt. Des Weiteren lässt sich mit ihnen eine homogene und gleichmäßige Beschichtung erzeugen, was zu einer verbesserten Oberflächenqualität und Funktionalität führt.

Bei einer besonders vorteilhaften Ausführung des Verfahrens wird/werden die Passivierungsschicht und/oder die Schutzschicht und/oder die metallisch leitende Diffusionsbarriere und/oder die metallisch leitende Abdeckschicht und/oder die Metallisierungsschicht und/oder die Kantenmetallisierungsschicht jeweils bei einer Temperatur von maximal 350°C aufgebracht und prozessiert.

Denkbar ist dabei auch, dass die Passivierungsschicht und/oder die Schutzschicht und/oder die metallisch leitende Diffusionsbarriere und/oder die metallisch leitende Abdeckschicht und/oder die Metallisierungsschicht und/oder die Kantenmetallisierungsschicht bei Raumtemperatur aufgebracht werden, um anschließend bei einer Temperatur von maximal 350°C getrocknet und gebrannt werden.

Diese vergleichsweise geringe Temperatur ist besonders vorteilhaft für das herzustellende Endprodukt, da sichergestellt werden kann, dass der Widerstand des resistiven Elementes nicht negativ beeinflusst wird. Demnach kann mit diesem Niedertemperaturverfahren die Genauigkeit des oberflächenmontierbaren Bauteils sichergestellt werden.

Ein zweiter Aspekt der Erfindung ist ein oberflächenmontierbares Bauteil für eine elektronische Vorrichtung, insbesondere hergestellt nach einem Verfahren gemäß einem der vorhergehenden Ansprüche, aufweisend:
a) ein Substrat aufweisend eine erste Seite mit einem ersten Elektrodenabschnitt und einem zweiten Elektrodenabschnitt und eine der ersten Seite gegenüberliegende zweite Seite mit einem dritten Elektrodenabschnitt und mindestens einem vierten Elektrodenabschnitt, sowie einer Mantelfläche, wobei die Mantelfläche zwischen der ersten Seite und der zweiten Seite umlaufend angeordnet ist,
b) einen Elementabschnitt, wobei der Elementabschnitt zwischen dem ersten Elektrodenabschnitt und dem zweiten Elektrodenabschnitt ausgebildet ist, und wobei der Elementabschnitt ein resistives Element aufweist,
c) eine Passivierungsschicht, wobei die Passivierungsschicht auf dem Elementabschnitt angeordnet ist,
d) eine Schutzschicht, wobei die Schutzschicht auf der Passivierungsschicht angeordnet ist,
e) eine Metallisierungsschicht, die zumindest abschnittsweise auf mindestens einer der Flächen der Mantelfläche des Substrats ausgebildet ist,
f) eine Kantenmetallisierungsschicht, die zumindest abschnittweise auf der mindestens einer der Flächen der Mantelfläche des Substrats und/oder der Metallisierungsschicht des Substrats ausgebildet ist.

Die Metallisierungsschicht des ersten und zweiten Elektrodenabschnitts sowie des dritten und vierten Elektrodenabschnitts kann in vorteilhafterweise Platin aufweisen.

Das oberfächenmontierbare Bauteil weist ein sehr genaues resistives Element auf, welches sich für hochpräzise Temperaturmessungen besonders eignet und ist dabei aufgrund seiner einzelnen Schichten und deren Eigenschaften besonders robust gegen Umwelteinflüsse und Stöße.

In einer besonders vorteilhaften Ausgestaltung eines oberflächenmontierbaren Bauteils ist eine metallisch leitende Diffusionsbarriere auf dem Elektrodenmaterial des ersten Elektrodenabschnitts und des zweiten Elektrodenabschnitts ausgebildet.

Die Diffusionsbarriere verhindert, dass Atome, Ionen oder Moleküle zwischen den Elektrodenabschnitten und der Abdeckschicht bzw. der Kantenmetallisierung ausgetauscht werden.

In vorteilhafterweise kann bei dem oberfächenmontierbaren Bauteil eine metallisch leitende Abdeckschicht auf der Diffusionsbarriere ausgebildet sein. Zusätzlich oder alternativ kann die metallisch leitende Abdeckschicht sowohl auf dem dritten Elektrodenabschnitt als auch auf dem vierten Elektrodenabschnitt ausgebildet sein.

Die Abdeckschicht kann auf die Elektrodenabschnitte aufgetragen werden. Sie schützt die Elektrodenabschnitte während der Kantenmetallisierung und verhindert zusätzlich die Diffusion.

Des Weiteren kann es bei dem oberflächenmontierbaren Bauteil von Vorteil sein, wenn die Passivierungsschicht eine anorganische Sputterschicht aufweist. Dabei umfasst die Sputterschicht insbesondere Siliziumoxid (SiO2) und/oder Tantalpentoxid (Ta2O5).

Durch die anorganische Sputterschicht und die darauf aufgetragene Schutzschicht ist das resistive Element mit einer robusten Versiegelung ausgestattet. Dies schützt zusätzlich vor äußeren Einflüssen. Gleichzeitig wird durch die Schutzschicht ein nachträgliches Beschriften oder Bedrucken vereinfacht.

Bei dem oberflächenmontierbaren Bauteil ist es besonders vorteilhaft, wenn die Diffusionsbarriere eine Titan-Wolfram-Legierung (TiW) mit 5 - 30 % Titan aufweist.

Dies erhöht die Stabilität und Korrosionsbeständigkeit des oberflächenmontierbaren Bauteils.

Für die Korrosionsbeständigkeit des oberflächenmontierbaren Bauteils kann es weiterhin von Vorteil sein, wenn die Kantenmetallisierungsschicht ein Schichtsystem, insbesondere ein Nickel-Zinn-Schichtsystem, ist. Dabei kann das Schichtsystem eine erste Schicht, insbesondere eine Nickel-Schicht, mit einer Dicke von 2 bis 10 µm aufweisen. Zusätzlich kann das Schichtsystem eine zweite Schicht, insbesondere eine Zinn-Schicht, mit einer Dicke (D2) von 3 bis 10 µm aufweisen.

Um den Schutz vor Umwelteinflüssen sicherstellen zu können, ist es bei dem oberflächenmontierbaren Bauteil vorteilhaft, wenn die Abdeckschicht auf der ersten Diffusionsbarriere eine Dicke von 3 bis 10 µm aufweist.

Weitere Merkmale und Vorteile der Erfindung ergeben sich aus der nachfolgenden Beschreibung, in der bevorzugte Ausführungsformen der Erfindung anhand von schematischen Zeichnungen erläutert sind.

Dabei zeigt:
- Figur 1a: eine Schnittansicht eines oberflächenmontierbaren Bauteils in einem Schritt a) eines Verfahrens zur Herstellung eines oberflächenmotierbaren Bauteils;
- Figur 1b: eine Schnittansicht eines oberflächenmontierbaren Bauteils in einem Schritt b) eines Verfahrens zur Herstellung eines oberflächenmotierbaren Bauteils;
- Figur 1c: eine Schnittansicht eines oberflächenmontierbaren Bauteils in einem Schritt c) eines Verfahrens zur Herstellung eines oberflächenmotierbaren Bauteils;
- Figur 1d: eine Schnittansicht eines oberflächenmontierbaren Bauteils in einem Schritt d) eines Verfahrens zur Herstellung eines oberflächenmotierbaren Bauteils;
- Figur 1e: eine Schnittansicht eines oberflächenmontierbaren Bauteils in einem Schritt d1) eines Verfahrens zur Herstellung eines oberflächenmotierbaren Bauteils;
- Figur 1f: eine Schnittansicht eines oberflächenmontierbaren Bauteils in einem Schritt d2) eines Verfahrens zur Herstellung eines oberflächenmotierbaren Bauteils;
- Figur 1g: eine Schnittansicht eines oberflächenmontierbaren Bauteils in einem Schritt f) eines Verfahrens zur Herstellung eines oberflächenmotierbaren Bauteils;
- Figur 1h: eine Schnittansicht eines oberflächenmontierbaren Bauteils in einem Schritt h) eines Verfahrens zur Herstellung eines oberflächenmotierbaren Bauteils;
- Figur 2: eine schematische Ansicht eines Verfahrens zur Herstellung eines oberflächenmotierbaren Bauteils;
- Figur 3: eine schematische Darstellung eines Substratbogens nach einem Vereinzeln in einem Schritt e);
- Figur 4: eine schematische Darstellung eines bereits vereinzelten Substratbogens nach einem weiteren Vereinzeln in einem Schritt g);
- Figur 5: eine schematische Darstellung eines oberflächenmontierbaren Bauteils.

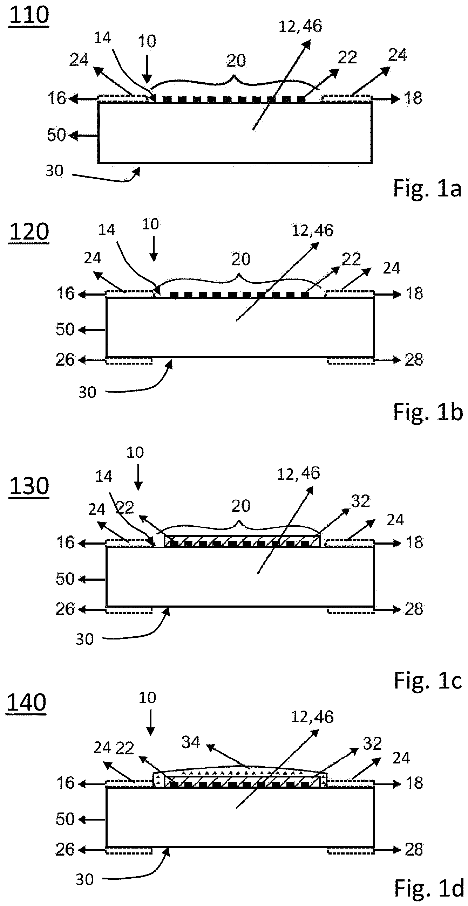

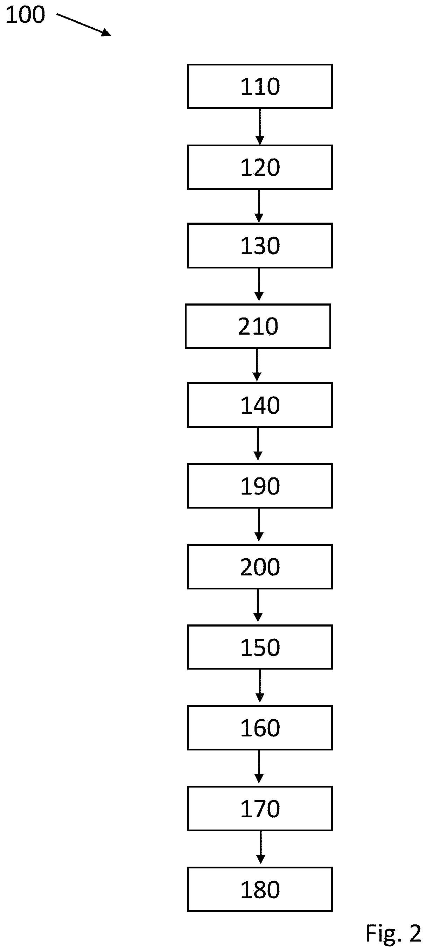

In den Fig. 1a bis 1h sowie in Fig. 2 bis 5 ist das Verfahren 100 zur Herstellung eines oberflächenmontierbaren Bauteils 10 für eine elektronische Vorrichtung dargestellt. Dabei zeigt Fig. 2 die schematische Darstellung der einzelnen Schritte einer möglichen Reihenfolge, um zu dem herzustellenden oberflächenmontierbaren Bauteil zu gelangen. Die Fig. 1a bis 1h zeigen jeweils eine Schnittansicht nach einem jeweiligen Schritt.

In Fig. 1a wird das Bereitstellen 110 eines Substratbogens 12 gezeigt. Es ist dargestellt, dass der Substratbogen 12 eine erste Seite 14 mit einem ersten Elektrodenabschnitt 16 und einem zweiten Elektrodenabschnitt 18 aufweist. Dabei ist zwischen dem ersten Elektrodenabschnitt 16 und dem zweiten Elektrodenabschnitt 18 ein Elementabschnitt 20 ausgebildet. In diesem Elementabschnitt 20 ist ein resistives Element 22 vorgesehen. Ferner ist zu erkennen, dass sowohl der erste als auch der zweite Elektrodenabschnitt 16, 18 bereits eine Metallisierung 24 aufweisen, welche zuvor aufgetragen wurde.

In Fig. 1b ist das oberflächenmontierbare Bauteil 10 nach dem Aufbringen 120 eines dritten Elektrodenabschnitts 26 und mindestens eines vierten Elektrodenabschnitts 28 auf einer zweiten Seite 30 des Substratbogens 12 dargestellt. Dabei ist die zweite Seite 30 der ersten Seite 14 des Substratbogens 12 gegenüberliegend angeordnet.

Dabei ist es möglich, dass erst das Aufbringen 120 eines dritten Elektrodenabschnitts 26 und mindestens eines vierten Elektrodenabschnitts 28 auf einer zweiten Seite 30 des Substratbogens 12 durchgeführt wird und anschließend der ersten Elektrodenabschnitt 16 und einem zweiten Elektrodenabschnitt 18 mit dem gleichen Verfahren aufgebracht werden.

Anschließend wird das resistive Element 22 des Elementabschnitts 20, in einem Trimmprozess, insbesondere in einem digitalen Trimmprozess, getrimmt 210.

In Fig. 1c wurde die Passivierungsschicht 32 auf den Elementabschnitt 20 aufgebracht 130. Hier ist die Passivierungsschicht 32 eine einlagige Schicht. Allerdings ist es denkbar, dass die Passivierungsschicht 32 als ein mehrlagiges Schichtsystem ausgebildet ist.

Die Passivierungsschicht 32 ist eine anorganische Sputterschicht. Diese weist vorliegend Siliziumdioxid SiO2 und Tantalpentoxid Ta2O5 auf.

Die Fig. 1d zeigt die auf die Passivierungsschicht 32 aufgebrachte 140 Schutzschicht 34 des oberflächenmontierbaren Bauteils.

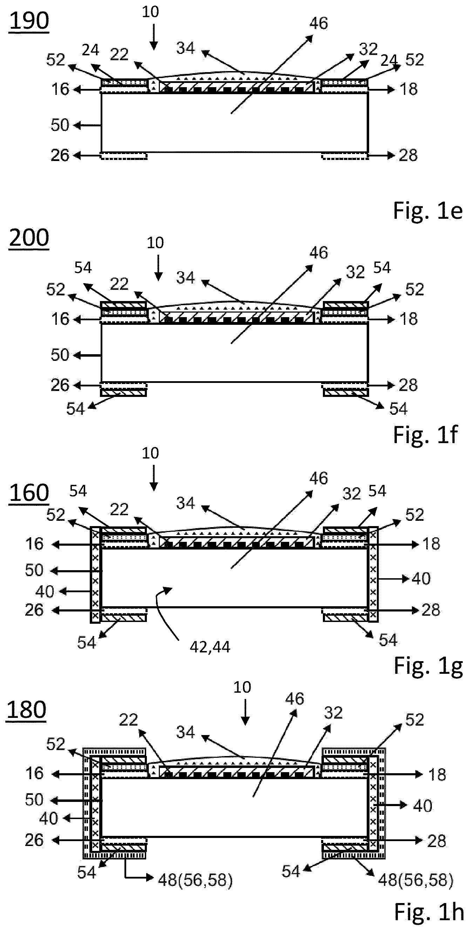

In Fig. 1e wurde eine metallisch leitende Diffusionsbarriere 52 auf das Elektrodenmaterial des ersten Elektrodenabschnitts 16 und des zweiten Elektrodenabschnitts 18 aufgebracht 190. Zusätzlich wurde eine metallisch leitende Abdeckschicht 54 auf sowohl die Diffusionsbarriere 52 als auch den dritten und vierten Elektrodenabschnitt 26, 28 aufgebracht 200. Dabei weist die Abdeckschicht 54 Kupfer Cu auf.

In dem vorliegenden Verfahren weist die Diffusionsbarriere 52 eine Titan-Wolfram-Legierung TiW mit 5 bis 30 % Titan auf.

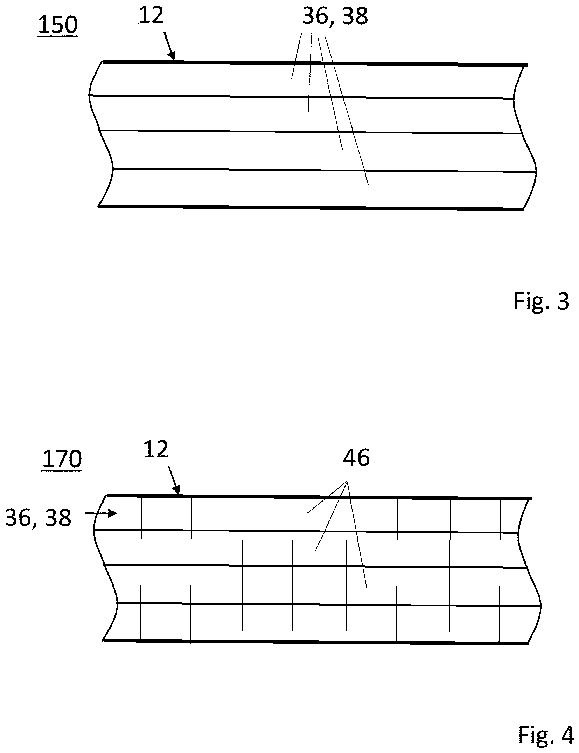

Nach diesen Schritten, siehe Fig. 2, wird der Substratbogen 12 in mehrere erste Substrat-Nutzen 36 oder Substrat-Zeilen-Nutzen 38 vereinzelt 150, wie in Fig. 3 dargestellt.

In Fig. 1g ist das zumindest abschnittsweises Aufbringen 160 einer Metallisierungsschicht 40 auf mindestens eine Fläche 42 des ersten Substrat-Nutzens 36 gezeigt. Diese Fläche erstreckt sich zwischen der ersten Seite 14 und der zweiten Seite 30 des Substratbogens. Bei der Fläche 42 kann es sich um die Trennfläche 44 handeln, die bei dem vorherigen Vereinzeln entstanden ist. Diese ist hier in ihrer Draufsicht dargestellt.

Dabei weist die die Metallisierungsschicht 40 eine Nickel-Chrom Legierung NiCr mit 5 bis 30 % Chrom auf.

Im Anschluss werden mehreren erste Substrat-Nutzen 36 in mehrere einzelne Substrate 46 vereinzelt 170, dies ist in Fig. 4 dargestellt.

In Fig. 1h wird das Ergebnis des zumindest abschnittsweisen Aufbringens und Galvanisieren 180 mindestens einer Kantenmetallisierungsschicht 48 auf mindestens eine Fläche 42, vor allem der mindestens einen Trennfläche 44, einer Mantelfläche 50 des Substrats 46.

Zusätzlich wurde bei dieser Herstellung eine Kantenmetallisierungsschicht 48 auf die Metallisierungsschicht 40 der mindestens einen Fläche 42, insbesondere der mindestens einen Trennfläche 44, der Mantelfläche 50 des ersten Substrat-Nutzens 36 und auf die oberste Schicht des Elektrodenabschnitts 16, 18 aufgebracht und galvanisiert 180.

Dabei wird die Kantenmetallisierungsschicht 48 als ein Schichtsystem aufgebracht, wobei das Schichtsystem eine erste Schicht 56 mit einer Dicke (D1) von 2 bis 10 µm aufweist und, wobei das Schichtsystem eine zweite Schicht 58 eine Dicke (D2) von 3 bis 10 µm aufweist.

Im vorliegenden Verfahren wird ein Nickel-Zinn-Schichtsystem als Kantenmetallisierungsschicht aufgebracht. Dabei ist die erste Schicht die Nickel-Schicht und die zweite Schicht die Zinn-Schicht.

Dabei werden sowohl die mindestens eine Passivierungsschicht 32 und die optionale Diffusionsbarriere 52 und die Abdeckschicht 54 als auch die Metallisierungsschicht 40 jeweils in einem Sputterprozess aufgebracht

In einer weiteren Ausführung können die Schichten 32, 52, 54, 40 durch Bedampfung aufgebracht werden 130, 190, 200.

Da es sich hier um ein Niedertemperatur-Verfahren handelt werden die Passivierungsschicht 32, die Schutzschicht 34, die beispielsweise als Kunststoff-Schicht ausgebildet ist, die metallisch leitende Diffusionsbarriere 52, die metallisch leitende Abdeckschicht 54, die Metallisierungsschicht 40 und die Kantenmetallisierungsschicht 48 jeweils bei einer Temperatur von maximal 350°C aufgebracht 130, 140, 180, 190, 200.

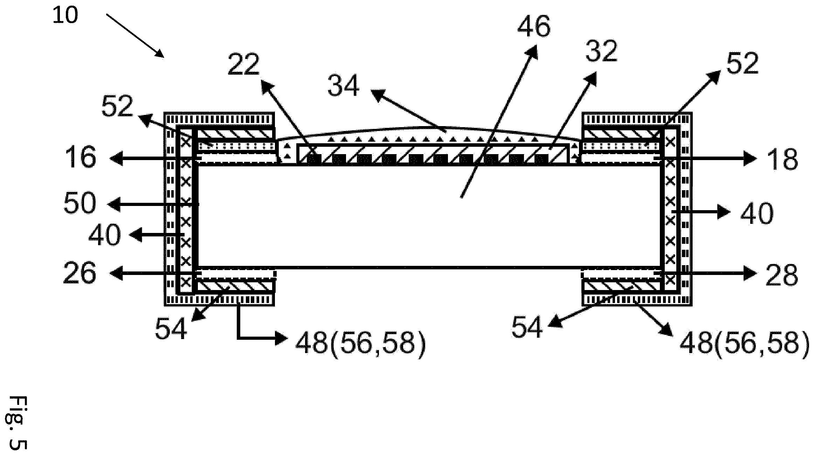

In Fig. 5 ist das gemäß dem vorher beschriebenen und in den Fig. 1 a bis h sowie 2 bis 4 dargestellt Verfahren hergestellte oberflächenmontierbare Bauteil 10 für eine elektronische Vorrichtung dargestellt.

Das oberflächenmontierbare Bauteil 10 umfasst folgendes
a) ein Substrat 46 aufweisend eine erste Seite 14 mit einem ersten Elektrodenabschnitt 16 und einem zweiten Elektrodenabschnitt 18 und eine der ersten Seite 14 gegenüberliegende zweite Seite 30 mit einem dritten Elektrodenabschnitt 26 und mindestens einem vierten Elektrodenabschnitt 28, sowie einer Mantelfläche 50, wobei die Mantelfläche 50 zwischen der ersten Seite 14 und der zweiten Seite 30 umlaufend angeordnet ist,
b) einen Elementabschnitt 20, wobei der Elementabschnitt 20 zwischen dem ersten Elektrodenabschnitt 16 und dem zweiten Elektrodenabschnitt 18 ausgebildet ist, und wobei der Elementabschnitt 20 ein resistives Element 22 aufweist,
c) eine Passivierungsschicht 32, wobei die Passivierungsschicht 32 auf dem Elementabschnitt 20 angeordnet ist,
d) eine Schutzschicht 34, wobei die Schutzschicht 34 auf der Passivierungsschicht 32 angeordnet ist,
e) eine Metallisierungsschicht 40, die zumindest abschnittsweise auf mindestens einer der Flächen der Mantelfläche 50 des Substrats 46 ausgebildet ist,
f) eine Kantenmetallisierungsschicht 48, die zumindest abschnittweise auf der mindestens einer der Flächen 42 der Mantelfläche 50 des Substrats 46 und/oder der Metallisierungsschicht 40 des Substrats 46 ausgebildet ist.

In dem hier dargestellten Ausführungsbeispiel ist zusätzlich eine metallisch leitenden Diffusionsbarriere 52 auf dem Elektrodenmaterial des ersten Elektrodenabschnitts 16 und des zweiten Elektrodenabschnitts 18 ausgebildet. Dabei weist die Diffusionsbarriere 52 eine Titan-Wolfram-Legierung TiW mit 5 - 30 % Titan auf.

Dabei ist zusätzlich eine metallisch leitende Abdeckschicht 54 auf der Diffusionsbarriere 52, dem dritten Elektrodenabschnitt 26 und dem vierten Elektrodenabschnitt 28 ausgebildet. Die Abdeckschicht 54 auf der ersten Diffusionsbarriere 52 weist vorliegend eine Dicke von 3 bis 10 µm auf.

Dabei ist die Passivierungsschicht 32 eine anorganische Sputterschicht, welche Siliziumoxid SiO2 und Tantalpentoxid Ta2O5 aufweist.

Des Weiteren ist die Kantenmetallisierungsschicht 48 vorliegend als ein Schichtsystem ausgebildet und weist eine erste Schicht 56 mit einer Dicke (D1) von 2 bis 10 µm und eine zweite Schicht 58 mit einer Dicke (D2) von 3 bis 10 µm auf. Dabei ist das Schichtsystem als ein Nickel-Zinn-Schichtsystem ausgebildet und weist eine erste Nickel-Schicht und eine zweite Zinn-Schicht auf.

### Bezugszeichenliste

- 100: Verfahren
- 110: Bereitstellen eines Substratbogens
- 120: Aufbringen eines dritten Elektrodenabschnitts und mindestens eines vierten Elektrodenabschnitts
- 130: Aufbringen einer Passivierungsschicht auf den Elementabschnitt
- 140: Aufbringen einer Kunststoff-Schicht
- 150: Vereinzeln des Substratbogens
- 160: Aufbringen einer Metallisierungsschicht
- 170: Vereinzeln der mehreren ersten Substrat-Nutzen
- 180: Aufbringen einer Kantenmetallisierung
- 190: Aufbringen einer metallisch leitenden Diffusionsbarriere
- 200: Aufbringen einer metallisch leitenden Abdeckschicht
- 210: Trimmen

- 10: oberflächenmontierbares Bauteil
- 12: Substratbogen
- 14: erste Seite Substratbogen
- 16: erster Elektrodenabschnitt
- 18: zweiter Elektrodenabschnitt
- 20: Elementabschnitt
- 22: resistives Element
- 24: Metallisierung
- 26: dritter Elektrodenabschnitt
- 28: vierter Elektrodenabschnitt
- 30: zweite Seite
- 32: Passivierungsschicht
- 34: Kunststoff-Schicht
- 36: Substrat-Nutzen
- 38: Substrat-Zeilen-Nutzen
- 40: Metallisierungsschicht
- 42: Fläche
- 44: Trennfläche
- 46: Substrat
- 48: Kantenmetallisierungsschicht
- 50: Mantelfläche
- 52: Diffusionsbarriere
- 54: Abdeckschicht
- 56: erste Schicht
- 58: zweite Schicht

- D1: Dicke erste Schicht
- D2: Dicke zweite Schicht

## Patentansprüche

1. Verfahren (100) zur Herstellung eines oberflächenmontierbaren Bauteils (10) für eine elektronische Vorrichtung, wobei das Verfahren (100) die folgenden Schritte umfasst:
i) Bereitstellen (110) eines Substratbogens (12),
wobei der Substratbogen (12) eine erste Seite (14) mit einem ersten Elektrodenabschnitt (16) und einem zweiten Elektrodenabschnitt (18) aufweist, wobei zwischen dem ersten Elektrodenabschnitt (16) und dem zweiten Elektrodenabschnitt (18) ein Elementabschnitt (20) ausgebildet ist, wobei der Elementabschnitt (20) ein resistives Element (22) aufweist und der erste und zweite Elektrodenabschnitt (16, 18) eine Metallisierung (24) aufweisen,
j) Aufbringen (120) eines dritten Elektrodenabschnitts (26) und mindestens eines vierten Elektrodenabschnitts (28) auf einer zweiten Seite (30) des Substratbogens (12), wobei die zweite Seite (30) der ersten Seite (14) des Substratbogens (12) gegenüberliegend angeordnet ist,
k) Aufbringen (130) einer Passivierungsschicht (32) auf den Elementabschnitt (20), wobei die Passivierungsschicht (32) insbesondere als ein mehrlagiges Schichtsystem ausgebildet ist,
l) Aufbringen (140) einer Schutzschicht (34) auf die Passivierungsschicht (32),
m) Vereinzeln (150) des Substratbogens (12) in mehrere erste Substrat-Nutzen (36), insbesondere mehrere Substrat-Zeilen-Nutzen (38),
n) zumindest abschnittsweises Aufbringen (160) einer Metallisierungsschicht (48) auf mindestens eine Fläche (42), insbesondere mindestens eine Trennfläche (44), des ersten Substrat-Nutzens (36), welche sich zwischen der ersten Seite (14) und der zweiten Seite (30) erstreckt,
o) Vereinzeln (170) der mehreren ersten Substrat-Nutzen (36) in mehrere einzelne Substrate (46),
p) zumindest abschnittsweises Aufbringen (180) mindestens einer Kantenmetallisierungsschicht (48) auf mindestens eine Fläche (42), insbesondere der mindestens einen Trennfläche (44), einer Mantelfläche (50) des Substrats (46) und/oder auf die Metallisierungsschicht (40) der mindestens einen Fläche (42), insbesondere der mindestens einen Trennfläche (44), der Mantelfläche (50) des ersten Substrat-Nutzens (36) und auf die oberste Schicht des Elektrodenabschnitts (16, 18).

2. Verfahren (100) nach Anspruch 1,
**dadurch gekennzeichnet, dass**
eine metallisch leitende Diffusionsbarriere (52) auf das Elektrodenmaterial des ersten Elektrodenabschnitts (16) und des zweiten Elektrodenabschnitts (18) aufgebracht (190) wird und/oder, dass
eine metallisch leitende Abdeckschicht (54) auf die Diffusionsbarriere (52) und/oder den dritten und vierten Elektrodenabschnitt (26, 28) aufgebracht (200) wird.

3. Verfahren (100) nach Anspruch 1 oder 2,
**dadurch gekennzeichnet, dass**
mindestens eine Passivierungsschicht (32) und/oder die optionale Diffusionsbarriere (52) und/oder die Abdeckschicht (54) und/oder die Metallisierungsschicht (40) jeweils in einem PVD-Beschichtungsprozess oder einem CVD-Beschichtungsprozess oder durch Bedampfen aufgebracht (130, 190, 200) wird/werden.

4. Verfahren (100) nach einem der vorhergehenden Ansprüche,
**dadurch gekennzeichnet, dass**
das resistive Element (22) des Elementabschnitts (20), insbesondere vor dem Aufbringen (130) der Passivierungsschicht (32), in einem Trimmprozess, insbesondere in einem digitalen Trimmprozess, getrimmt (210) wird.

5. Verfahren (100) nach einem der vorhergehenden Ansprüche,
**dadurch gekennzeichnet, dass**
die Passivierungsschicht (32) eine anorganische Sputterschicht, insbesondere Siliziumdioxid (SiO2) und/oder Tantalpentoxid (Ta2O5), aufweist.

6. Verfahren (100) nach einem der vorhergehenden Ansprüche,
**dadurch gekennzeichnet, dass**
die Diffusionsbarriere (52) eine Titan-Wolfram-Legierung (TiW) mit 5 bis 30 % Titan aufweist.

7. Verfahren (100) nach einem der vorhergehenden Ansprüche,
**dadurch gekennzeichnet, dass**
die Abdeckschicht (54) Kupfer (Cu) aufweist.

8. Verfahren (100) nach einem der vorhergehenden Ansprüche,
**dadurch gekennzeichnet, dass**
die Metallisierungsschicht (40) eine Nickel-Chrom Legierung (NiCr) mit 5 bis 30 % Chrom aufweist.

9. Verfahren (100) nach einem der vorhergehenden Ansprüche,
**dadurch gekennzeichnet, dass**
die Kantenmetallisierungsschicht (48) als ein Schichtsystem, insbesondere ein Nickel-Zinn-Schichtsystem, aufgebracht wird, wobei das Schichtsystem eine erste Schicht (56), insbesondere eine Nickel-Schicht, mit einer Dicke (D1) von 2 bis 10 µm aufweist und, wobei das Schichtsystem eine zweite Schicht (58), insbesondere eine Zinn-Schicht, eine Dicke (D2) von 3 bis 10 µm aufweist.

10. Verfahren (100) nach einem der vorhergehenden Ansprüche,
**dadurch gekennzeichnet, dass**
die Passivierungsschicht (32) und/oder die Kunststoff-Schicht (34) und/oder die metallisch leitende Diffusionsbarriere (52) und/oder die metallisch leitende Abdeckschicht (54) und/oder die Metallisierungsschicht (40) und/oder die Kantenmetallisierungsschicht (48) jeweils bei einer Temperatur von maximal 350°C aufgebracht (130, 140, 180, 190, 200) wird/werden.

11. Oberflächenmontierbares Bauteil (10) für eine elektronische Vorrichtung, insbesondere hergestellt nach einem Verfahren (100) gemäß einem der vorhergehenden Ansprüche, aufweisend:
g) ein Substrat (46) aufweisend eine erste Seite (14) mit einem ersten Elektrodenabschnitt (16) und einem zweiten Elektrodenabschnitt (18) und eine der ersten Seite (14) gegenüberliegende zweite Seite (30) mit einem dritten Elektrodenabschnitt (26) und mindestens einem vierten Elektrodenabschnitt (28), sowie einer Mantelfläche (50), wobei die Mantelfläche (50) zwischen der ersten Seite (14) und der zweiten Seite (30) umlaufend angeordnet ist,
h) einen Elementabschnitt (20), wobei der Elementabschnitt (20) zwischen dem ersten Elektrodenabschnitt (16) und dem zweiten Elektrodenabschnitt (18) ausgebildet ist, und wobei der Elementabschnitt (20) ein resistives Element (22) aufweist,
i) eine Passivierungsschicht (32), wobei die Passivierungsschicht (32) auf dem Elementabschnitt (20) angeordnet ist,
j) eine Schutzschicht (34), wobei die Schutzschicht (34) auf der Passivierungsschicht (32) angeordnet ist,
k) eine Metallisierungsschicht (40), die zumindest abschnittsweise auf mindestens einer der Flächen der Mantelfläche (50) des Substrats (46) ausgebildet ist,
l) eine Kantenmetallisierungsschicht (48), die zumindest abschnittweise auf der mindestens einer der Flächen (42) der Mantelfläche (50) des Substrats (46) und/oder der Metallisierungsschicht (40) des Substrats (46) ausgebildet ist.

12. Oberflächenmontierbares Bauteil (10) gemäß Anspruch 11,
**dadurch gekennzeichnet, dass**
eine metallisch leitenden Diffusionsbarriere (52) auf dem Elektrodenmaterial des ersten Elektrodenabschnitts (16) und des zweiten Elektrodenabschnitts (18) ausgebildet ist, und/oder dass eine metallisch leitenden Abdeckschicht (54) auf der Diffusionsbarriere (52) und/oder dem dritten Elektrodenabschnitt (26) und dem vierten Elektrodenabschnitt (28) ausgebildet ist.

13. Oberflächenmontierbares Bauteil (10) gemäß Anspruch 11 oder 12,
**dadurch gekennzeichnet, dass**
die Passivierungsschicht (32) eine anorganische Sputterschicht aufweist, insbesondere dass die Sputterschicht Siliziumoxid (SiO2) und/oder Tantalpentoxid (Ta2O5) umfasst.

14. Oberflächenmontierbares Bauteil (10) gemäß einem der Ansprüche 11 bis 13,
**dadurch gekennzeichnet, dass**
die Diffusionsbarriere (52) eine Titan-Wolfram-Legierung (TiW) mit 5 - 30 % Titan aufweist.

15. Oberflächenmontierbares Bauteil (10) gemäß einem der Ansprüche 11 bis 14,
**dadurch gekennzeichnet, dass**
die Kantenmetallisierungsschicht (48) ein Schichtsystem, insbesondere ein Nickel-Zinn-Schichtsystem, ist, wobei das Schichtsystem eine erste Schicht (56), insbesondere eine Nickel-Schicht, mit einer Dicke (D1) von 2 bis 10 µm aufweist und, wobei das Schichtsystem eine zweite Schicht (58), insbesondere eine Zinn-Schicht, mit einer Dicke (D2) von 3 bis 10 µm aufweist.

16. Oberflächenmontierbares Bauteil (10) gemäß einem der Ansprüche 11 bis 15,
**dadurch gekennzeichnet, dass**
die Abdeckschicht (54) auf der ersten Diffusionsbarriere (52) eine Dicke von 3 bis 10 µm aufweist.
